# EUROPEAN PATENT APPLICATION

(11) **EP 4 737 199 A1**
(43) Date of publication of application: **06.05.2026**
(21) Application number: 24830051.9
(22) Date of filing: 08.04.2024
(51) Int. Cl.: B60L 53/80, B66C 1/22

(54) **HOISTING TYPE BATTERY SWAPPING MECHANISM ADAPTIVE TO SWAPPABLE-BATTERY BOXES OF VARIOUS SIZES**

(30) Priority: 30.06.2023 CN 202310798317
(71) Applicant: Jiangsu Advanced Construction Machinery Innovation Center Ltd., Xuzhou, Jiangsu 221004 (CN)
(72) Inventor: WANG, Shuai, Xuzhou, Jiangsu 221004 (CN); SHAO, Xingguo, Xuzhou, Jiangsu 221004 (CN); XIAO, Penghui, Xuzhou, Jiangsu 221004 (CN)
(74) Representative: Proi World Intellectual Property GmbH
(86) International application number: PCT/CN2024/086494
(87) International publication number: WO 2025/001401

(57) **Abstract**

A hoisting type battery swapping mechanism adaptive to swappable-battery boxes of various sizes, comprising a lifting appliance (1) and an upper frame (21) fixed to a swappable-battery box. The lifting appliance (1) comprises a fixing support (11), cylinder bodies (112), telescopic arms (12) and rotary locking mechanisms (13). The cylinder bodies (112) are symmetrically arranged on the fixing support (11) and have opposite extending and retracting directions, each telescopic arm (12) being connected to an extending and retracting end of a cylinder body (112). The rotary locking mechanisms (13) are connected to lower ends of two sides of cross beams of the telescopic arms (12), and each rotary locking mechanism (13) is further provided with a hook (131) rotatable around an axis. The upper frame (21) is connected to the top of the swappable-battery box, and the upper frame (21) is provided with mounting blocks (211) adaptive to the rotary locking mechanisms (13), the mounting blocks (211) being provided with mounting holes (2111); when rotating a certain angle, the hooks (131) can extend into the mounting holes (2111). The lifting appliance (1) is extendable and retractable, and is adaptive to swappable-battery boxes of different sizes. For the swappable-battery boxes of different sizes, three-stage guide positioning and shared locking mechanisms (34) are provided in a central area, and have unchanged positions and sizes, such that a fixing base configured for a large size can be compatible with both swappable-battery boxes of large sizes and swappable-battery boxes of small sizes.

## Description

### BACKGROUND OF THE INVENTION

### 1. Technical Field

The invention relates to a hoisting type battery swapping mechanism adaptive to swappable-battery boxes of various sizes, and belongs to the technical field of battery swapping.

### 2. Description of Related Art

At present, in the field of commercial vehicles, the battery swapping technology is mostly applied to swappable-battery heavy trucks, swappable-battery boxes of which are rectangular frames. Because swappable-battery boxes for different types of vehicles have basically the same length and width particularly in the horizontal direction, a lifting appliance for hoisting the swappable-battery boxes away from vehicle bodies, a vehicle-mounted fixing base for locking the swappable-battery boxes, and a fixing base for locking the swappable-battery boxes at battery swapping stations can adapt to different types of vehicles without changing their structures. Different form swappable-battery heavy trucks, there is a great variety of construction machines that have drastically different power demands, and corresponding swappable-battery boxes have drastically different sizes. The development of a specific battery swapping mechanism for each type of machines will greatly increase the development cost and is not beneficial to the adaption of the fixing base at the battery swapping stations to different type of machines. In addition, most lifting appliances in the prior art use a complex pneumatic circuit to drive locking mechanisms, leading to high costs.

### BRIEF SUMMARY OF THE INVENTION

To overcome the defects in the prior art, the objective of the invention is to provide a hoisting type battery swapping mechanism adaptive to swappable-battery boxes of various sizes, solving the problems of poor universality of lifting appliances, complex locking mechanisms and high costs in the prior art.

To fulfill the above objective, the invention adopts the following technical solution:
A hoisting type battery swapping mechanism adaptive to swappable-battery boxes of various sizes comprises a lifting appliance and an upper frame fixed to a swappable-battery box, wherein:
the lifting appliance comprises a fixing support, cylinder bodies, telescopic arms and rotary locking mechanisms, the cylinder bodies are symmetrically arranged on the fixing support and have opposite extending and retracting directions, the telescopic arms are connected to extending and retracting ends of the cylinder bodies, the rotary locking mechanisms are connected to lower ends of cross beams on two sides of the telescopic arms, and each rotary locking mechanism is provided with a hook rotatable around an axis;
the upper frame is connected to a top of the swappable-battery box and provided with mounting blocks adaptive to the rotary locking mechanisms, the mounting blocks are provided with mounting holes, and when rotating by an angle, the hooks extend into the mounting holes.

Further, positioning components are arranged below the fixing support and provided with slopes, and the upper frame is provided with guide slopes adaptive to the slopes of the positioning components.

Further, the hoisting type battery swapping mechanism further comprises a guide positioning device, wherein the guide positioning device comprises square guide pillars arranged on a first fixing base and chamfers arranged on edges of an inner surface of a base plate of a lower frame, the square guide pillars are adaptive to the chamfers, and the lower frame is connected to a bottom of the swappable-battery box.

Further, the guide positioning device further comprises cylindrical pins arranged on the first fixing base and positioning holes formed in the base plate of the lower frame, tops of the cylindrical pins are conical, the positioning holes are flared, and the cylindrical pins are adaptive to the positioning holes.

Further, the square guide pillars are higher than the cylindrical pins.

Further, battery-swapping connector plugs are fixedly connected to a center of a bottom of the lower frame, and battery-swapping connector sockets adaptive to the battery-swapping connector plugs are arranged in a center of the first fixing base.

Further, the cylindrical pins are higher than the battery-swapping connector plugs.

Further, first locking mechanisms are arranged on the first fixing base, the first fixing base is located on an inner side of the square guide pillars, and locking cylinders adaptive to the first locking mechanisms are arranged in the lower frame.

Further, each first locking mechanism comprises an electric push rod, a locking pin and a locking pin sleeve located at a base end, the locking pin is connected to the electric push rod, the locking pin sleeve is fixed to the first fixing base, and the electric push rod is coaxial with an axial hole in the locking pin sleeve.

Further, second locking mechanisms are arranged on the first fixing base and located on outer sides of the square guide pillars, and the second locking mechanisms are matched with the locking cylinders in the lower frame for the swappable-battery box of a large size.

The invention fulfills the following beneficial effects:
1. The lifting appliance is extendable and retractable, thus being adaptive to swappable-battery boxes of different sizes.
2. For swappable-battery boxes of different sizes, three-stage guide positioning and shared locking mechanisms are arranged in the central area, and have unchanged positions and sizes, such that the fixing base configured for a large size can be compatible with both swappable-battery boxes of large sizes and swappable-battery boxes of small sizes.
3. An electric locking mechanism is adopted, and a complex pneumatic or hydraulic circuit is omitted, such that the cost is low, and locking and unlocking are easy.

### BRIEF DESCRIPTION OF THE SEVERAL VIEWS OF THE DRAWINGS

FIG. 1 is a front view of a battery swapping mechanism for a swappable-battery box of a large size;
FIG. 2 is a stereogram of the battery swapping mechanism for the swappable-battery box of a large size;
FIG. 3 is an exploded view of the battery swapping mechanism for the swappable-battery box of a large size;
FIG. 4 is a stereogram of a lifting appliance;
FIG. 5 is a stereogram of a lower frame for the swappable-battery box of a large size;
FIG. 6 is a stereogram of a fixing base for the swappable-battery box of a large size;
FIG. 7 is a collaboration diagram of the lower frame and the fixing base for the swappable-battery box of a large size;
FIG. 8 is a stereogram of a battery swapping mechanism for a swappable-battery box of a small size;
FIG. 9 is a collaboration diagram of a lower frame and a fixing base for the swappable-battery box of a small size;
FIG. 10 is a collaboration diagram of the lower frame for the swappable-battery box of a small size and the fixing base for the swappable-battery box of a large size.

Reference signs: 1, lifting appliance; 2, first swappable-battery box; 2', second swappable-battery box; 11, fixing support; 111, positioning component; 112, cylinder body; 12, telescopic arm; 13, rotary locking mechanism; 131, hook; 21, upper frame; 211, mounting block; 2111, mounting hole; 212, guide slope; 22, first lower frame; 22', second lower frame; 221, chamfer; 222, positioning hole; 223, battery-swapping connector plug; 224, locking cylinder; 3, first fixing base; 3', second fixing base; 31, square guide pillar; 32, cylindrical pin; 33, battery-swapping connector socket; 34, first locking mechanism; 34', second locking mechanism; 341, electric push rod; 342, locking pin; 343, locking pin sleeve.

### DETAILED DESCRIPTION OF THE INVENTION

The technical solution of the invention is explained in detail below in conjunction with accompanying drawings and specific embodiments. It should be understood that the embodiments of the application and specific features in the embodiments are used for explaining the technical solution of the application in detail rather than limiting the technical solution of the invention. The embodiments of the application and the technical features in the embodiments can be combined without conflicts.

### Embodiment 1

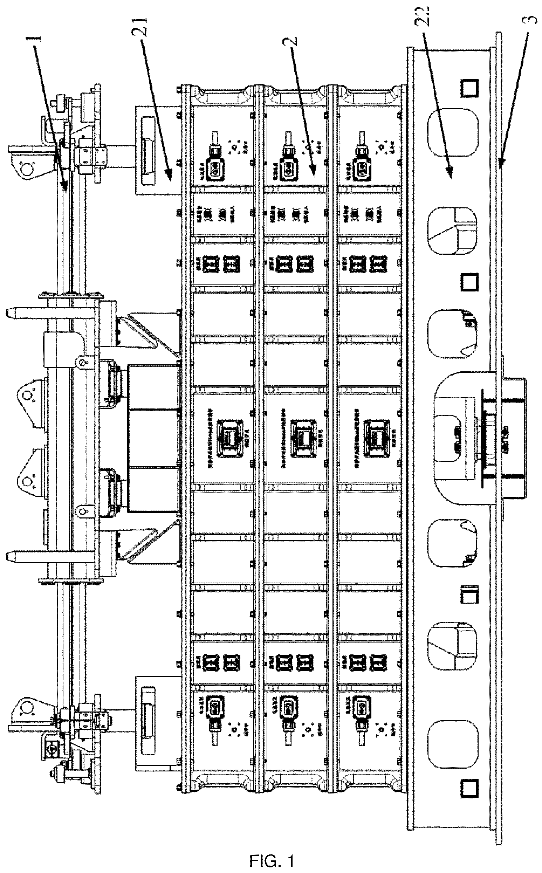

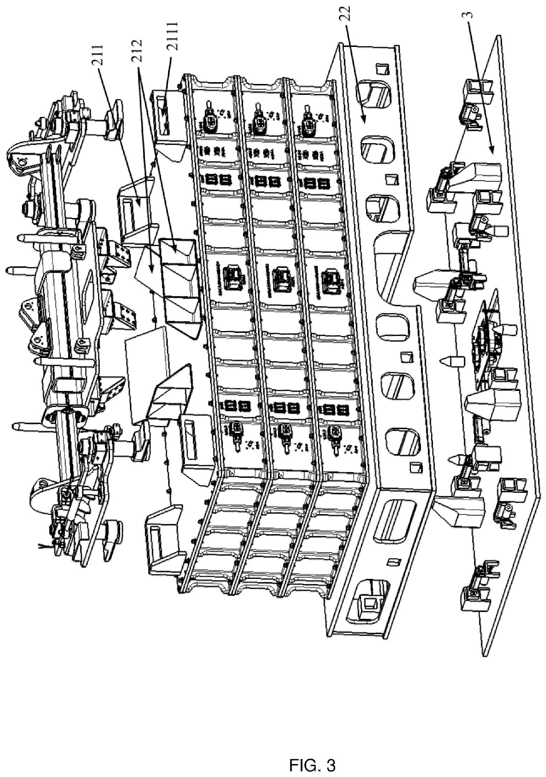

This embodiment discloses a hoisting type battery swapping mechanism adaptive to swappable-battery boxes of various sizes. With a first swappable-battery box 2 as an example (the first swappable-battery box 2 is a swappable-battery box of a large size), referring to FIGS. 1-3, the battery swapping mechanism comprises a lifting mechanism located at the top of the first swappable-battery box 2 and a guide positioning and locking mechanism located at the bottom of the first swappable-battery box 2.

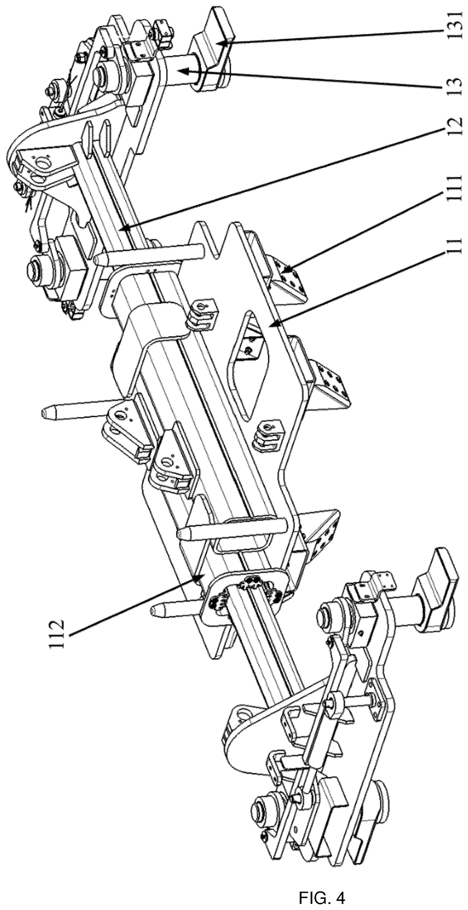

The lifting mechanism comprises a lifting appliance 1 and an upper frame 21 fixed to the first swappable-battery box 2, and the lifting appliance 1 is adaptively connected to the upper frame 21. As shown in FIG. 4, the lifting appliance 1 comprises a fixing support 11 in the middle, two T-shaped telescopic arms 12 and four rotary locking mechanisms 13, wherein positioning components 111 are arranged below the fixing support 11 and provided with slopes that face outwards, the two T-shaped telescopic arms 12 are arranged oppositely, and the four rotary locking mechanisms 13 are distributed on two sides of cross beams of the two T-shaped telescopic arms, and each rotary locking mechanism 13 is provided with a hook 131 rotatable around an axis. The upper frame 21 comprises mounting blocks 211 and guide slopes 212, wherein the mounting blocks 211 are provided with mounting holes 2111. The slopes of the positioning components 111 are matched with the guide slopes 212 to restrain the lifting appliance 1 and the first swappable-battery box 2 in two directions in the horizontal plane and adjust a horizontal error of the lifting appliance 1 to ensure that all the hooks 131 can be smoothly inserted into the mounting holes 2111 after being rotated by 90°.

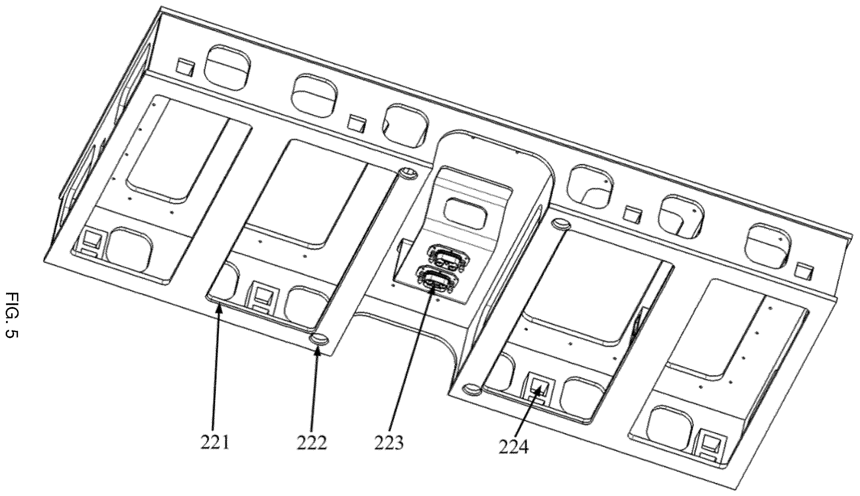

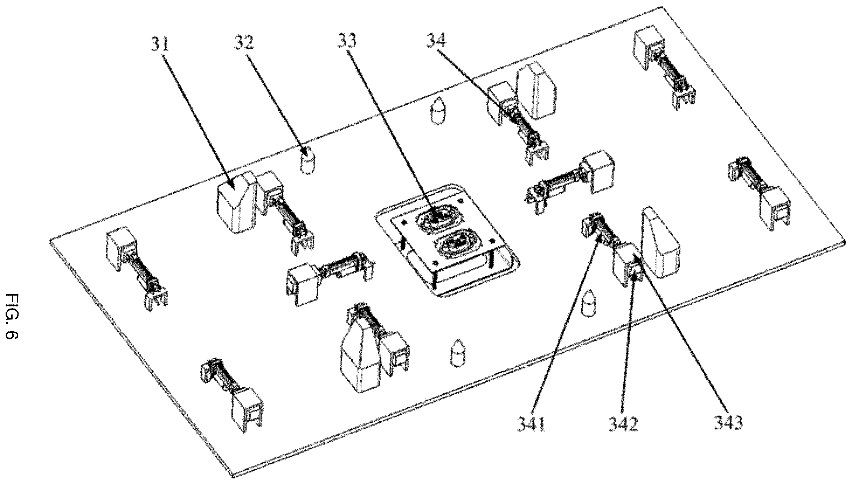

As shown in FIG. 6, a first fixing base 3 is provided with square guide pillars 31 with two outer adjacent sides being slopes, cylindrical pins 32 with tops being conical, battery-swapping connector sockets 33 and laterally-inserted first locking mechanisms 34, wherein the square guide pillars 31 are higher than the cylindrical pins 32; the cylindrical pins 32 are higher than the battery-swapping connector sockets 33; each laterally-inserted first locking mechanism 34 comprises an electric push rod 341, a locking pin 342 and a locking pin sleeve 343 at a base end, the locking pin 342 is connected to the electric push rod 341 and acts with the electric push rod 341, the locking pin sleeve 343 is fixed to the first fixing base 3, and the electric push rod 341 is coaxial with an axial hole in the locking pin sleeve 343. As shown in FIG. 5, edges of an inner surface of a base plate of a first lower frame 22 are provided with chamfers 221 matched with the square guide pillars 31 to realize rough positioning and flared positioning holes 222 matched with the cylindrical pins 32 to realize accurate positioning, battery-swapping connector plugs 223 are fixedly connected to the middle of the bottom of the first lower frame 22, and the battery-swapping connector plugs 223 work together with the battery-swapping connector sockets 33 on the first fixing base 3 to realize further accurate position adjustment by means of guide pins and guide holes. Locking cylinders 224 adaptive to the first locking mechanisms 34 are arranged in the first lower frame 22. When the first swappable-battery box 2 descends with the lifting appliance 1, a horizontal error of the swappable-battery box will be adjusted by means of three-stage guide positioning of the square guide pillars 31, the conical cylindrical pins 32 and battery-swapping connectors to ensure that all the locking pins 342 are pushed by the electric push rods 341 to be smoothly inserted into the locking cylinders 224 at the swappable-battery box end from locking pin sleeves 343 at the base end, thus locking the first swappable-battery box 2.

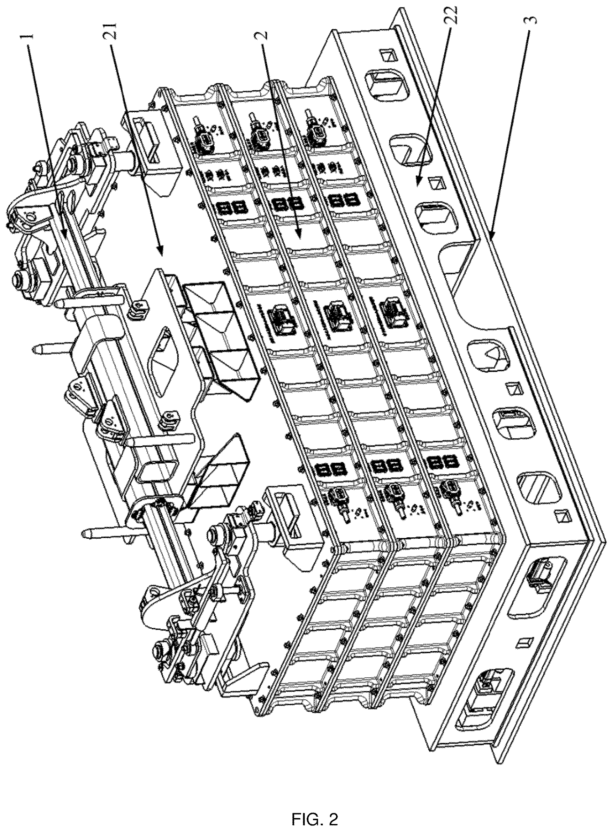

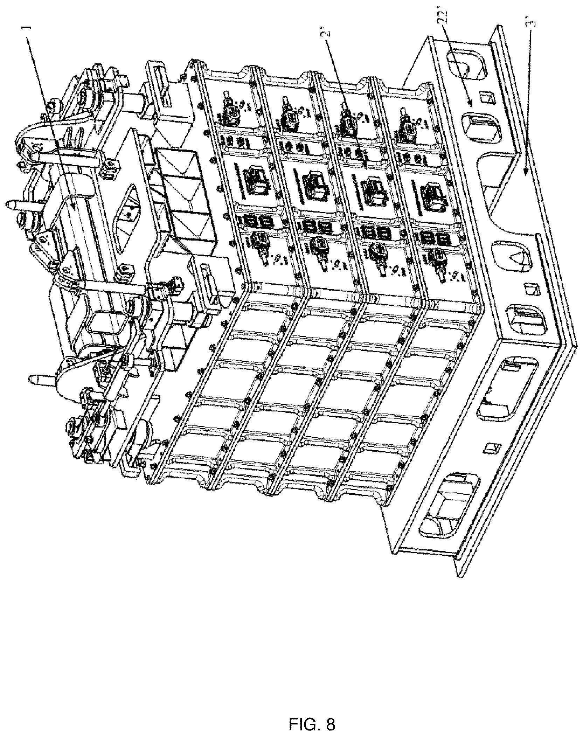

Referring to FIGS. 2, 4 and 8, with the extending and retracting direction of the telescopic arms 12 as a length direction, the size of the first swappable-battery box 2 is drastically different from the size of a second swappable-battery box 2' in this direction (the length of the first swappable-battery box 2 is greater than that of the second swappable-battery box 2'), so the distance between the mounting holes is greater. Two cylinder bodies 112 that are parallel to each other in an axial direction and opposite in direction are arranged on the fixing support 11, and the T-shaped telescopic arms 12 move along the cylinder bodies in the axial direction to adjust the distance between the hooks 131 in the length direction to adapt to the distance between the mounting holes for different swappable-battery boxes. To expand the movement range of the telescopic arms 12, the two cylinder bodies of the fixing support 11 are staggered.

### Embodiment 2

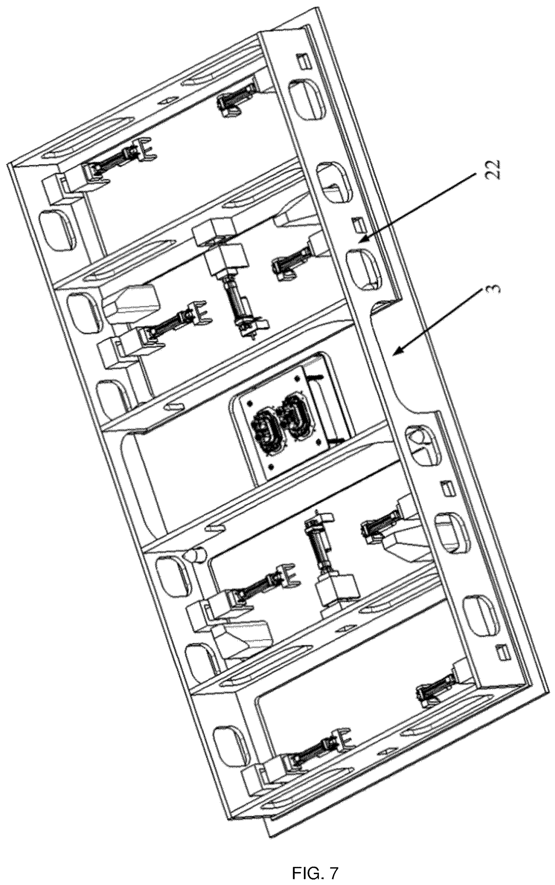

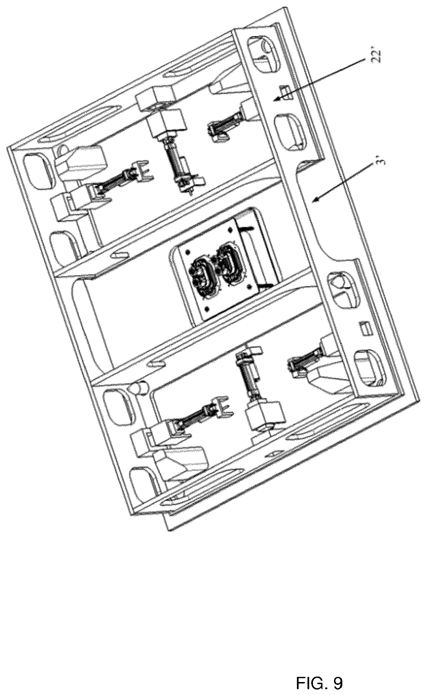

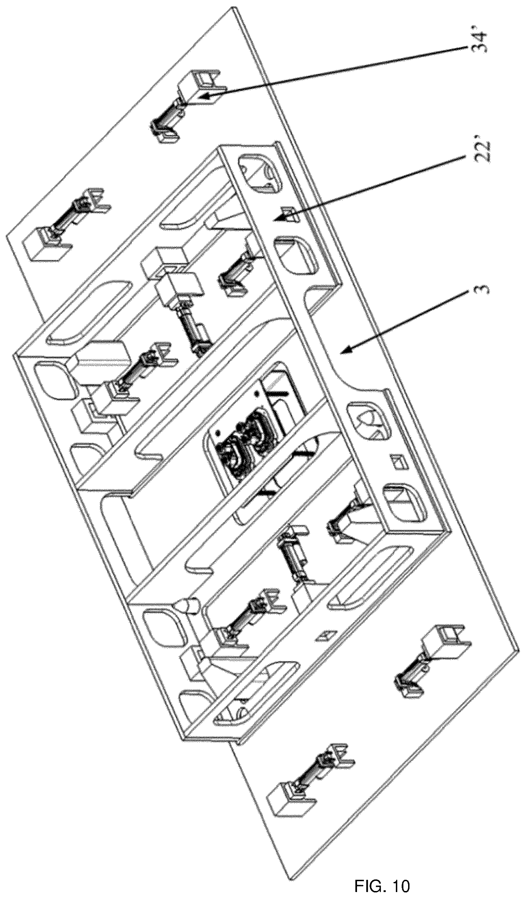

Referring to FIGS. 7, 9 and 10, the size of the first lower frame 22 is drastically different from the size of a second lower frame 22' in the length direction, different fixing bases are selected and configured for swappable-battery boxes of different sizes, and correspondingly, the size of the first fixing base 3 is drastically different from the size of a second fixing base 3'. To unify the sizes of the fixing bases to adapt to swappable-battery boxes of different sizes, the shape and position of three-stage guide positioning for swappable-battery boxes of different sizes remain unchanged, and the square guide pillars 31, the conical cylindrical pins 32 and the battery-swapping connector plugs 33 are arranged in a central area of the fixing base, and the second lower frame 22' for the second swappable-battery box covers the central area. In addition, six first locking mechanisms 34 are arranged in the central area and located in two directions of the horizontal direction to realize locking in two directions of the horizontal plane, and the six first locking mechanisms are shared by swappable-battery boxes of different sizes. In addition, for the swappable-battery boxes of a large size, second locking mechanisms 34' may be additionally arranged on two sides except for the central area, and the locking mechanisms may be not used when the battery swapping mechanism is applied to a swappable-battery box of a small size.

The above embodiments are merely preferred ones of the invention. It should be noted that for those ordinarily skilled in the art, some improvements and transformations can be made without departing from the technical principle of the invention, and all these improvements and transformations should also fall within the protection scope of the invention.

## Claims

1. A hoisting type battery swapping mechanism adaptive to swappable-battery boxes of various sizes, comprising a lifting appliance (1) and an upper frame (21) fixed to a swappable-battery box, wherein:
the lifting appliance (1) comprises a fixing support (11), cylinder bodies (112), telescopic arms (12) and rotary locking mechanisms (13), the cylinder bodies (112) are symmetrically arranged on the fixing support (11) and have opposite extending and retracting directions, the telescopic arms (12) are connected to extending and retracting ends of the cylinder bodies (112), the rotary locking mechanisms (13) are connected to lower ends of cross beams on two sides of the telescopic arms (12), and each said rotary locking mechanism (13) is provided with a hook (131) rotatable around an axis;
the upper frame (21) is connected to a top of the swappable-battery box and provided with mounting blocks (211) adaptive to the rotary locking mechanisms (13), the mounting blocks (211) are provided with mounting holes (2111), and when rotating by an angle, the hooks (131) extend into the mounting holes (2111).

2. The hoisting type battery swapping mechanism adaptive to swappable-battery boxes of various sizes according to Claim 1, wherein positioning components (111) are arranged below the fixing support (11) and provided with slopes, and the upper frame (21) is provided with guide slopes (212) adaptive to the slopes of the positioning components (111).

3. The hoisting type battery swapping mechanism adaptive to swappable-battery boxes of various sizes according to Claim 1, further comprising a guide positioning device, wherein the guide positioning device comprises square guide pillars (31) arranged on a first fixing base (3) and chamfers (221) arranged on edges of an inner surface of a base plate of a lower frame, the square guide pillars (31) are adaptive to the chamfers (221), and the lower frame is connected to a bottom of the swappable-battery box.

4. The hoisting type battery swapping mechanism adaptive to swappable-battery boxes of various sizes according to Claim 3, wherein the guide positioning device further comprises cylindrical pins (32) arranged on the first fixing base (3) and positioning holes (222) formed in the base plate of the lower frame, tops of the cylindrical pins (32) are conical, the positioning holes (222) are flared, and the cylindrical pins (32) are adaptive to the positioning holes (222).

5. The hoisting type battery swapping mechanism adaptive to swappable-battery boxes of various sizes according to Claim 4, wherein the square guide pillars (31) are higher than the cylindrical pins (32).

6. The hoisting type battery swapping mechanism adaptive to swappable-battery boxes of various sizes according to Claim 4, wherein battery-swapping connector plugs (223) are fixedly connected to a center of a bottom of the lower frame, and battery-swapping connector sockets (33) adaptive to the battery-swapping connector plugs (223) are arranged in a center of the first fixing base (3).

7. The hoisting type battery swapping mechanism adaptive to swappable-battery boxes of various sizes according to Claim 6, wherein the cylindrical pins (32) are higher than the battery-swapping connector sockets (33).

8. The hoisting type battery swapping mechanism adaptive to swappable-battery boxes of various sizes according to Claim 3, wherein first locking mechanisms (34) are arranged on the first fixing base (3), the first fixing base (3) is located on an inner side of the square guide pillars (31), and locking cylinders (224) adaptive to the first locking mechanisms (34) are arranged in the lower frame.

9. The hoisting type battery swapping mechanism adaptive to swappable-battery boxes of various sizes according to Claim 8, wherein each said first locking mechanism (34) comprises an electric push rod (341), a locking pin (342) and a locking pin sleeve (343) located at a base end, the locking pin (342) is connected to the electric push rod (341), the locking pin sleeve (343) is fixed to the first fixing base (3), and the electric push rod (341) is coaxial with an axial hole in the locking pin sleeve (343).

10. The hoisting type battery swapping mechanism adaptive to swappable-battery boxes of various sizes according to Claim 8, wherein second locking mechanisms (34') are arranged on the first fixing base (3) and located on outer sides of the square guide pillars (31), and the second locking mechanisms (34') are matched with the locking cylinders (224) in the lower frame for the swappable-battery box of a large size.
